# EUROPÄISCHE PATENTANMELDUNG

(11) **EP 1 172 668 A2**
(43) Veröffentlichungstag der Anmeldung: **16.01.2002**
(21) Anmeldenummer: 01250223.3
(22) Anmeldetag: 19.06.2001
(51) Int. Cl.: G01V 3/08

(54) **Vorrichtung und Verfahren zur Ortung und zur Bestimmung der Ausdehnung von nicht sichtbaren körpern aus ferromagnetischen Materialien in nichtferromagnetischer Umgebung**

(30) Priorität: 19.06.2000 DE 10030191
(71) Anmelder: Hahn-Meitner-Institut Berlin Gesellschaft mit beschränkter Haftung, 14109 Berlin (DE); Berliner Wasserbetriebe, 10179 Berlin (DE)
(72) Erfinder: Richter, Günter, 12159 Berlin (DE); Meisel, Ulrich, 10587 Berlin (DE); Müller, Bernd, 12159 Berlin (DE)
(74) Vertreter: Rudolph, Margit

(57) **Zusammenfassung**

Die Vorrichtung soll eine bessere Auflösung als bisher bekannte Lösungen des Standes der Technik auch in größeren Tiefen ermöglichen. Insbesondere soll sich die Vorrichtung eignen für die invasive Bestimmung des Ortes und der Ausdehnung von Reparaturschellen um oder in der Nähe von Nichteisenund Kunststoffrohren. Erfindungsgemäß weist eine Vorrichtung zur Ortung und zur Bestimmung der Ausdehnung von nicht sichtbaren Körpern aus ferromagnetischen Materialien in nichtferromagnetischer Umgebung einen wasserdichten, auswechselbaren Sensorkopf (I) mit einem Magnetfeldsensor (1), einem Permanentmagneten (2) zur Erzeugung eines statischen magnetischen Vorfeldes (Bias-Feld), einem Vorverstärker (3), und eine nachgeschaltete Auswerte-/Anzeige-Einheit (II) mit mindestens einem Mittel zur Schwellwerteinstellung, Komparator oder quasi-logarithmischem Verstärker, einem Mittel zur optischen und/oder akustischen Anzeige, einem Mittel zur Stromversorgung der Auswerte-/Anzeige-Einheit (II), sowie einem Mittel mit integrierten Leitungen, das Sensorkopf (I) und Auswerte-/Anzeige-Einheit (II) elektrisch miteinander verbindet, und Mittel zur Messung des zurückgelegten Weges des Sensorkopfes (I) auf.

## Beschreibung

Die Erfindung betrifft eine Vorrichtung und ein Verfahren zur Ortung und zur Bestimmung der Ausdehnung von nicht sichtbaren Körpern aus ferromagnetischen Materialien in nichtferromagnetischer Umgebung.

Eine derartige Vorrichtung kann bei der Ermittlung der Lage eines ferromagnetischen Körpers Anwendung finden, beispielsweise einer Reparatur-Stahlschelle, die mit einem nichtferrromagnetischen Körper, beispielsweise einem Blei- oder Kunststoffrohr, unterhalb der Erdoberfläche verbunden ist.

Dem Stand der Technik nach sind Verfahren zur Ortung derartiger Körper beispielsweise mittels Wechselstromverfahren bekannt. Diese Lösung kann jedoch bei der Ortung eines ferromagnetischen Körpers in einem Bleirohr nicht eingesetzt werden, da durch die übliche Wanddicke dieses Rohres technisch auch bei sehr niedrigen Frequenzen die ferromagnetischen Eigenschaften des zu ortenden Körpers vollständig abgeschirmt werden.

Weiterhin ist eine Lösung bekannt, bei der die Leitfähigkeitsänderung der Rohrwand bei Vorhandensein eines ferromagnetischen Körpers gemessen wird. Diese Lösung ist ebenfalls für die Ortung eines ferromagnetischen Körpers (Stahlschelle) ungeeignet, da zwischen Schelle und Rohr zur Abdichtung ein elektrisch isolierendes Material liegt. Ausserdem sind elektrische Kontaktierungen der Rohrwand wegen Kalkablagerungen nicht zuverlässig.

Beim Einsatz invasiver Sendegeräte zur Abstrahlung elektrischer oder magnetischer Felder geschieht die Ortung mit Empfängern an der Erdoberfläche durch Auswertung des Feldverlaufs. Bei Vorhandensein von Metallrohren ist diese Lösung jedoch ungeeignet, da eine materialabhängige Ortung nicht realisierbar ist.

Metallsuchgeräte für nichtinvasive Erdbodenuntersuchungen (s. beispielsweise DE 198 03 957 "Metallsuchgerät und Verfahren zur Detektion eines metallischen Gegenstandes", wobei DE 197 31 560 "Verfahren zum Orten und zur Identifizierung unterhalb der Oberfläche befindlicher ferromagnetischer Munitionskörper") sprechen auf Metall an und unterscheiden auch ferromagnetische und nichtferromagnetische Materialien.

So ist in DE 198 03 957 ein Metallsuchgeät mit Suchspule in einem Schwingkreis, elektrischer Schaltung zur Detektion von Induktivitätsänderungen und Anzeigevorrichtung beschrieben. Der Schwingkreis verfügt über einen regelbaren Widerstand, wodurch die Rückkopplung des Schwingkreises mit der Suchspule so variiert werden kann, dass der Schwingkreis sich in einem Zustand gerade kurz nach dem Schwingungseinsatz befindet. Nach Bestimmung eines Referenzwertes der Schwingungsamplitude wird die Amplitudendifferenz zwischen Referenzamplitude und aktueller Amplitude ermittelt und diese Amplitudendifferenz angezeigt. Das Suchgerät verfügt über einen teleskopartig gestalteten Tragarm, in dem die elektrischen Leitungen verlaufen, ausserdem sind für eine einfache Handhabung eine optische und akustische Anzeige vorgesehen.

Das Suchgerät, das oberhalb der Erdoberfläche eingesetzt ist, ermöglicht zwar das Orten von verborgenen metallischen Gegenständen in einer nichtmetallischen Umgebung, jedoch können die Ausdehnungen dieser Gegenstände nicht mit der beschriebenen Lösung erfasst werden.

Sowohl die Ortung als auch die Bestimmung der Form unterhalb der Erdoberfläche befindlicher Munitionskörper ist mit dem in DE 197 31 560 beschriebenen Verfahren möglich. Hierbei wird ein für das Material des ferromagnetischen Munitionskörpers charakteristischer Signalwert bestimmt, dessen ortsabhängiger Verlauf dann vorzugsweise in zwei zueinander orthogonalen Richtungen ermittelt wird. Aus diesem Verlauf schließt ein geübter Beobachter direkt auf das Vorhandensein eines zu räumenden Munitionskörpers. Bei Aktivierung einer Sendespule, die neben zwei Empfängerspulen Bestandteil einer an sich bekannten Magnetsonde sind, erzeugt diese ein entsprechendes sich zeitlich änderndes Magnetfeld. Dieses Magnetfeld induziert in dem ferromagnetischen Munitionskörper Wirbelströme, die ein Sekundärfeld bewirken, das ein entsprechendes elektrisches Signal (Ortungssignal) in den beiden Empfängerspulen induziert. Dieses Ortungssignal wird anschließend integriert über ein vorgegebenes Zeitintervall nach Erreichen eines Maximalwertes, ein relatives Messsignal aus diesen beiden Größen ermittelt und der ortsabhängige Verlauf dieses relativen Messwertes für die Ermittlung der Munitionsart in Abhängigkeit ihrer Form, länglich oder kugelförmig, eingesetzt.

Die angeführten Lösungen des Standes der Technik sind alle für einen Einsatz oberhalb der Erdoberfläche geeignet. Sie weisen jedoch Abmessungen auf, die ihren Einsatz an und in Rohren, die in der Erde verlegt sind, nicht zulassen. Weiterhin ist die Genauigkeit der Messungen bei Tiefen ab etwa 30 cm nicht mehr ausreichend, und Versorgungsleitungen werden aus Gründen der Frostsicherheit und der Zerstörstörungssicherheit unter Straßen tiefer als 1 m verlegt. Eine Diskriminierung nach dem Material ist ebenfalls nicht immer gegeben, besonders dann, wenn relativ wenig ferromagnetisches Material von einer großen Menge nichtferromagnetischen Materials unterschieden werden muss. Bei der zuletzt genannten in DE 197 31 560 beschriebenen Lösung ist auch von Nachteil, dass die Auflösung nur sehr grob ist und die Auswertung der erhaltenen Messergebnisse nur von einem geübten Beobachter gemäß der ermittelten Form vorgenommen werden kann.

Deshalb ist es Aufgabe der Erfindung, eine Vorrichtung und ein Verfahren zur Ortung und zur Bestimmung der Ausdehnung von nicht sichtbaren Körpern aus ferromagnetischen Materialien in nichtferromagnetischer Umgebung anzugeben, die eine bessere Auflösung als bisher bekannte Lösungen des Standes der Technik auch in größeren Tiefen ermöglichen. Insbesondere soll sich die Vorrichtung eignen für die invasive Bestimmung des Ortes und der Ausdehnung von Reparaturschellen um oder in der Nähe von Nichteisen- und Kunststoffrohren, beispielsweise für Rohrleitungen der Wasserversorgungsunternehmen.

Die Aufgabe wird durch die Merkmale des ersten Vorrichtungsanspruches und des ersten Verfahrensanspruches gelöst.

Demgemäß weist die erfindungsgemäße Vorrichtung einen Sensorkopf mit einem Magnetfeldsensor, einem Permanentmagneten zur Erzeugung eines statischen magnetischen Vorfeldes (Bias-Feld), wobei die Bias-Feldstärke größer ist als die Erdmagnetfeldstärke, der justierbar ausgebildet und symmetrisch bezüglich des Magnetfeldsensors in einem Abstand angeordnet ist, wobei der Abstand zwischen Magnetfeldsensor und Permanentmagnet mindestens doppelt so groß ist wie der Durchmesser des Permanentmagneten, und einem Vorverstärker, und eine nachgeschaltete Auswerte-/Anzeige-Einheit mindestens aufweisend Mittel zur Schwellwerteinstellung, Komparator oder quasi-logarithmischem Verstärker, Mittel zur optischen und/oder akustischen Anzeige, Mittel zur Stromversorgung der Auswerte-/Anzeige-Einheit, sowie ein Mittel mit integrierten Leitungen, das Sensorkopf und Auswerte-/Anzeige-Einheit elektrisch miteinander verbindet, und Mittel zur Messung des zurückgelegten Weges des Sensorkopfes auf.

Trifft der Permanentmagnet des Sensorkopfes auf seinem Weg durch einen nichtferromagnetischen Körper auf einen Körper aus ferromagnetischem Material, so verformen sich die Magnetfelder, weil sie den Weg durch das magnetisch leitende Material bevorzugen. Die Änderung des statischen magnetischen Vorfeldes (Bias-Feld) im Magnetfeldsensor wird in Abhängigkeit der Lage des Sensorkopfes gemessen und ausgewertet.

Der an sich bekannte handelsübliche Magnetfeldsensor ist in seiner Längsachse magnetisch sensitiv und zur Messung statischer und Wechselfelder bis 1 MHz einsetzbar. Ein angeschlossener Vorverstärker verstärkt das im Magnetfeldsensor erhaltene Signal für die Verringerung des magnetischen Bias-Feldes mindestens so weit, dass ein geforderter Abstand zwischen dem Sensorkopf und der Auswerte-/Anzeige-Einheit möglich ist. Die symmetrische Anordnung des Permanentmagneten in einem bestimmten Abstand zu diesem, seine materialspezifischen Parameter und Abmessungen dienen der Einstellung einer Bias-Feldstärke, die nur wenig über der Erdmagnetfeldstärke liegt, um die Richtungsempfindlichkeit des Erdmagnetfeldes auf die Lage des Magnetfeldsensors klein zu halten und ein homogenes Magnetfeld im Magnetfeldsensor auszubilden. Je stärker der Magnet, desto größer ist die "Reichweite" der Feldlinien des vom Permanentmagneten erzeugten Magnetfeldes in die Umgebung. Eine geforderte Kleinheit des kompletten Sensorkopfes begrenzt die Größe des Stabmagneten und damit die Reichweite" der Magnetfeldlinien. Die Änderung der Bias-Feldstärke wird im Vorverstärker des Sensorkopfes verstärkt, über ein Mittel mit integrierten elektrischen Leitungen der Auswerte-/Anzeige-Einheit zugeleitet und hier mit einem - jeweils dem Anwendungsfall angepassten - Referenzschwellwert verglichen. Bei Vorhandensein eines ferromagnetischen Körpers liegt das Messsignal oberhalb des Schwellwertes und es wird ein Licht- und/oder akustisches Signal ausgelöst. Das Auffinden eines solchen Körpers kann so auch akustisch verfolgt werden, ohne direkten Blickkontakt zum Gerät zu haben. Da der Sensorkopf mittels Zug- oder Schubbewegung der Glasfaser-Ahle im nichtferromagnetischen Körper bewegt werden kann, erhält man über die Auswertung der Messsignale eine Aussage über die Ausdehnung des ferromagnetischen Körpers.

In Ausführungsformen der Erfindung ist vorgesehen, dass das Mittel mit integrierten Leitungen, das Sensorkopf und Auswerte-/Anzeige-Einheit elektrisch miteinander verbindet, eine Glasfaser-Ahle ist. Vorteilhafterweise weist die Glasfaser-Ahle einen Stecker mit Zug- und Druckentlastung für die Aufnahme des Sensorkopfes auf. Für eine gute Beweglichkeit des Sensorkopfes ist an diesem eine Zugöse angeordnet. Für die Glasfaser-Ahle ist eine Aufwickeleinrichtung (Haspel) vorgesehen. Für bestimmte Anwendungsfälle ist der Sensorkopf wasserdicht und auswechselbar ausgebildet.

Die erfindungsgemäße Lösung ermöglicht eine invasive Sensoranwendung in einem großen Durchmesserbereich, z.B. in Rohren mit einem Durchmesser von ¾ bis 2 Zoll. Neben dem Erkennen von ferromagnetischen Körpern um/ in nichtferromagnetische/n Rohre/n, wodurch eine Zerstörung des Zug-Schneidmessers beim grabenlosen Entfernen von beispielsweise alten Bleirohren (beispielsweise beschrieben in EP 0 748 971) vermieden wird, ist auch die Feststellung möglich, ob das Rohr in seiner ganzen Länge aus Blei besteht oder bereits durch Stahlrohr ergänzt oder ersetzt wurde. Weiterhin lässt sich mit der erfindungsgemäßen Lösung feststellen, ob in unmittelbarer Nähe des Bleirohres andere Stahlrohre liegen, was für das Schneidmesser oder weitere Erdarbeiten von Bedeutung sein kann.

Die erfindungsgemäße Lösung ist jedoch nicht auf die beschriebene Anwendung beschränkt, sondern läßt sich vielmehr sehr flexibel einsetzen, u.a. zum Auffinden ferromagnetischer Körper hinter Hauswänden.

Die erfindungsgemäße Lösung zeichnet sich durch Kleinheit, Robustheit, Netzunabhängigkeit und einfache Bedienbarkeit aus.

Weitere Einzelheiten und Vorteile der Erfindung ergeben sich aus dem folgenden Ausführungsbeispiel, das anhand von Figuren näher erläutert wird.

### Dabei zeigen:

- Fig. 1: schematisch einen Sensorkopf und Glasfaser-Ahle in der Draufsicht;
- Fig. 2: Sensorkopf und Glasfaser-Ahle gemäß Fig. 1 bei Magnetfeldänderung;
- Fig. 3: tragbare Einrichtung mit der erfindungsgemäßen Vorrichtung gemäß Fig. 1;
- Fig. 4: Stromlaufplan eines vorteilhaften Ausführungsbeispiels der erfindungsgemäßen Vorrichtung.

Im folgenden Ausführungsbeispiel wird ein Reparaturschellensucher beschrieben, mit dem die Lage und die Größe von Stahl-Reparaturschellen unbekannter Lage um alte Wasserrohre bestimmt wird. Bei Lokalisierung solcher Reparaturschellen an vergrabenen Wasserrohren kann beim grabenlosen Entfernen und Auswechseln dieser Rohre aus Blei- oder Kunststoff eine Zerstörung des Schneidmessers verhindert werden.

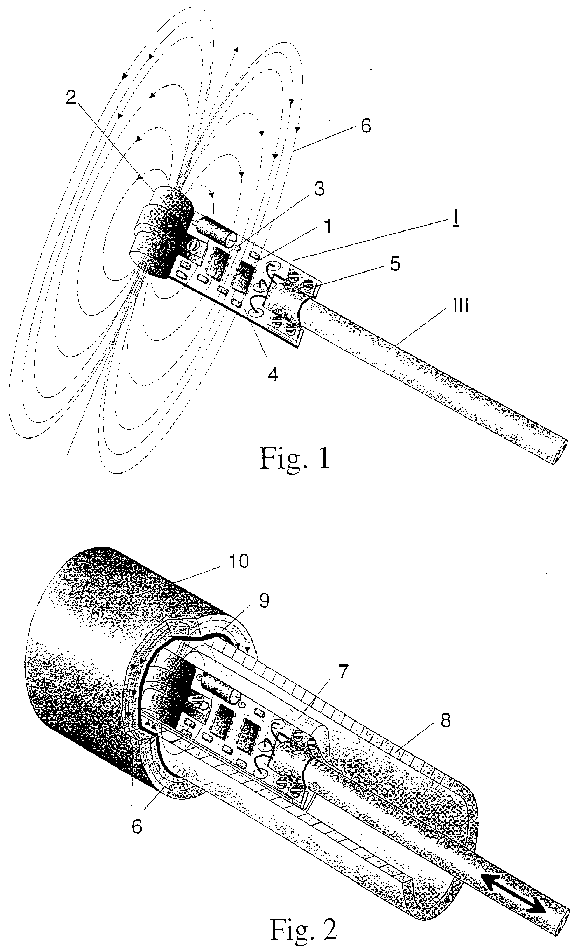

Der in Fig. 1 dargestellte Sensorkopf **I** weist einen Magnetfeldsensor **1,** einen Permanentmagneten **2** mit justierbarem Magnethalter und einen Vorverstärker **3** auf, wobei diese Bestandteile auf einer Leiterplatte **4** angeordnet sind. Der Sensorkopf **I** ist mit einer Glasfaser-Ahle **III** mit integrierten Leitungen elektrisch verbunden. Eine Zug-/Druckentlastung **5** an der Verbindungsstelle Sensorkopf **I**/Glasfaser-Ahle **III** dient der mechanischen Festigkeit der Vorrichtung. Die Leitungen der Glasfaser-Ahle **III** weisen für diese Ausführung eine Länge bis zu 40 m auf. Der Sensorkopf **I** hat eine Länge von ca. 40 mm. Der Permanentmagnet **2** ist in einem Abstand von 25 mm zum Magnetfeldsensor **1** angeordnet. In der Figur 1 ist auch exemplarisch der optimale Verlauf einiger Feldlinien durch den Magnetfeldsensor **1** (senkrecht in seiner Längsachse) dargestellt. Die Bias-Feldstärke ist so gewählt, dass sie wenig über der Erdmagnetfeldstärke liegt, um die Richtungsempfindlichkeit des Erdmagnetfeldes auf die Sensorlage klein zu halten. Der Vorverstärker **3**, der mit dem Magnetfeldsensor **1** verbunden ist, verstärkt das erhaltene elektrische Signal des Magnetfeldsensors **1** mindestens so weit, dass ein für dieses Ausführungsbeispiel geforderter Abstand zwischen Sensorkopf **I** und Anzeige/Auswerteeinheit **II,** die in dieser Figur nicht dargestellt ist, mit hinreichendem Störabstand möglich ist.

Gelangt nun der Permanentmagnet **2** des Sensorkopfes **I** durch Ziehen oder Schieben in die Nähe einer ferromagnetischen Reparaturschelle **10,** die um ein Wasserrohr **8** aus Blei oder Kunststoff angeordnet ist, wobei sich zwischen Reparaturschelle **10** und Wasserrohr **8** eine Gummidichtung **9** befindet, so beginnen sich die Magnetfelder zu verformen, weil sie den Weg durch das ferromagnetische Material bevorzugen, wie in Fig. 2 erkennbar ist. Durch die Längsachse des Sensor-IC's gelangt nur der geringere vektorielle Anteil und die differentielle Ausgangsspannung sinkt. Befindet sich der Permanentmagnet **2** vollständig in der Reparaturschelle **10**, so gelangen nur noch Streufeldlinien zum Magnetfeldsensor **1**, dieser liefert dann nur eine geringe Offset-Spannung. Über die Messung des zurückgelegten Weges bei der Schub- oder Zugbewegung des Sensorkopfes **I** ist auch die Länge der Reparaturschelle **10** feststellbar (im Vergleich mit einer Standard-Schelle) bzw. die Längsausdehnung eines störenden ferromagnetischen Körpers in der Nähe der Rohrleitung.

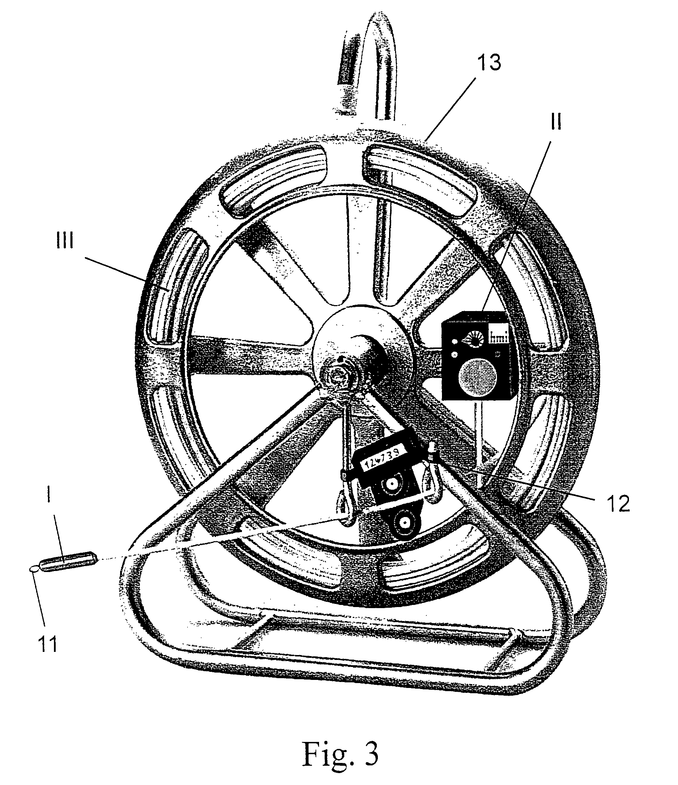

In Fig. 3 ist die Befestigung der erfindungsgemäßen Vorrichtung gemäß Fig. 1 auf einer kommerziellen Haspel **13** (z.B. der Firma Katimex) dargestellt. Die Glasfaser-Ahle **III** mit einem Durchmesser von 4,5 mm mit integrierten drei Kupferadern ist in ihrer Länge von ca. 30 m auf diese Haspel aufgewickelt. In der Nähe der Ahlenrückführungsöse ist ein rückstellbarer elektrischer oder mechanischer Längenzähler **12** montiert. Das spritzwassergeschützte Gehäuse der Auswerte-/Anzeigeeinheit **II** ist ebenfalls über einen Stecker mit Zugentlastung mit dem anderen Ende der Ahle **III** verbunden und auf eine Speiche des Haspelrades montiert. Für unterschiedliche Anwendungen sind wasserdichte auswechselbare Sensorköpfe **I** verschiedener Durchmesser und Empfindlichkeiten vorgesehen. Sie sind über eine wasserdichte stabile Dreh-Steckverbindung mit dem Kopf der Ahle **III** verbunden. Für eine gute Beweglichkeit ist am Sensorkopf **I** eine Zugöse **11** angeordnet. Für den Einsatz bei Erdarbeiten der Wasserversorgungsunternehmen und aus Stabilitätsgründen ist der kleine Sensorkopf **I** mit Zugöse **11** für Rohrleitungen ab 3/4-Zoll voll vergossen und fest druck- und zugentlastet mit der verhältnismäßig steifen Glasfaser-Ahle **III** verbunden. Die Führungsöse aus Stahl am Haspelgestell dient gleichzeitig der Funktionsüberprüfung der Elektronik vor Ort.

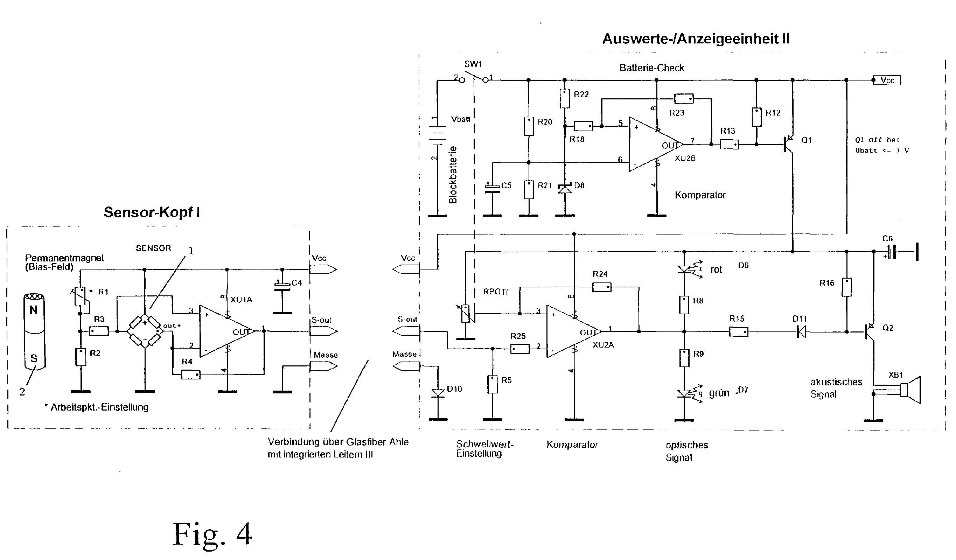

Der Stromlaufplan eines vorteilhaften Ausführungsbeispiels der erfindungsgemäßen Vorrichtung ist in Fig. 4 dargestellt. Deutlich erkennbar sind die Hauptbestandteile des Ausführungsbeispiels: der Sensorkopf **I** mit Permanentmagnet **2,** Magnetfeldsensor **1** und Verstärker **3** (**XU1A** in Fig. 4), die Auswerte-/Anzeige-Einheit **II** mit Mitteln zur Schwellwerteinstellung, Komparator, Mitteln zur optischen und/oder akustischen Anzeige und Mitteln zur Stromversorgung der Auswerte-/Anzeige-Einheit **II** und die Glasfaser-Ahle **III** mit integrierten Leitungen.

Die Brückenspannung der magnetisch veränderbaren Widerstände des Magnetfeldsensors **1** wird im Differenzverstärker **3** (**XU1A** in Fig. 4) so verstärkt und mit **R4** bestimmt, dass eine ausreichende Spannung für die weitere Verarbeitung je nach Anwendung erreicht wird. Der geringe Ausgangswiderstand des Operationsverstärkers vermeidet Störspannungseinflüsse auf der langen Ahlenstrecke. Mit dem Spannungsteiler **R1-R2** wird der Arbeitspunkt der Brücke so eingestellt, dass der mögliche Ausgangsspannungshub des Differenzverstärkers **XU1A** voll genutzt werden kann (dabei ist Uout von **XU1A** ≤ 300 mV bei ungestörtemvollem - Bias-Magnetfeld). Für das Ausführungsbeispiel der Reparaturschellensensorik wurde die Spannung so ausgelegt, dass die sich ergebenden Magnetfelddifferenzen zu einem ausreichenden Spannungshub führen, sodass direkt ein Komparator **XU2A** mit kleiner Hysterese die Pegelsprünge abfragen kann. Über die Schwellwerteinstellung **RPOTI** (die durch ein von aussen einstellbares Potentiometer mit Einschalter für die Batteriespannung realisiert ist) kann über den gesamten Ausgangsspannungshub die Schaltschwelle des Komparators verschoben werden. Diese Ja/Nein-Schwelle wird damit dem aktuellen Messfall angepasst. Wird das verstärkte Signal S-out des Magnetfeldsensors **1** positiver, was einem kleineren detektierten Bias-Magnetfeld entspricht als das der eingestellten Referenzschwelle, schaltet der Ausgang des Komparators **XU2A** auf LOW, läßt die grüne Leuchtdiode **D7** erlöschen und schaltet die rote LED **D6** ein, gleichbedeutend mit dem Vorhandensein einer Reparaturschelle. Gleichzeitig erfolgt nun der Start eines akustischen Signalgebers **XB1**. Die Ortung einer Reparaturschelle kann so ohne direkten Blickkontakt zum Gerät akustisch verfolgt werden. An Stelle eines Komparators kann auch ein quasi-logarithmischer Verstärker verwendet werden, der um den eingestellten Schwellwert eine hohe Verstärkung aufweist, und bei hoher Aussteuerung wegen des nichtlinearen Netzwerkes in der Gegenkopplung den Verstärker nicht in die Sättigung führt. Der Übergang zwischen grüner **D7** und roter Leuchtdiode **D6** ist dann bei kleinen Magnetfelddifferenzen gleitend. Für den Einsatz im "rauhen" Betrieb ist die Verwendung eines Komparators aber vorteilhafter, da bei mechanischen Stößen sich geringe Veränderungen an der Potentiometereinstellung nicht bemerkbar machen. Die untere Feststellgrenze zwischen "Rot/Grün" wird dabei durch die Hysterese festgelegt. Die Gesamtschaltung ist für die konkrete Anwendung der Suche nach Reparaturschellen um Wasserleitungen so ausgelegt, dass eine geringe Stromaufnahme die 9 V-Blockbatterie belastet. Sollte im Laufe der Batterielebensdauer die Spannung von 7 V unterschritten werden, so schaltet die Komparatorschaltung mit dem Verstärker **XU2B** die Leuchtdioden und den akustischen Signalgeber **XB1** über den Längstransistor **Q1** von der Betriebsspannung ab, die Vorrichtung bleibt "tot" und dieses gilt als Hinweis für den Anwender, die Batterie zu wechseln. Nach dem Einschalten über den Schalter **SW1** leuchtet die grüne Leuchtdiode **D7** und signalisiert Betriebsbereitschaft. Da die Ausgangs-Ruhespannung des Differenzverstärkers **XU1A** über Diode **D10** immer über der unteren Schwellenspannung des Komparators **XU2A** liegt, kann durch Drehung des Potentiometers **RPOTI** auf den unteren Anschlag die akustische Signalgeberfunktion und die rote LED **D6** getestet werden (simuliert das Vorhandensein einer Reparaturschelle).

## Patentansprüche

1. Vorrichtung zur Ortung und zur Bestimmung der Ausdehnung von nicht sichtbaren Körpern aus ferromagnetischen Materialien in nichtferromagnetischer Umgebung, die aufweist einen Sensorkopf (I) mit
- einem Magnetfeldsensor (1),
- einem Permanentmagneten (2) zur Erzeugung eines statischen magnetischen Vorfeldes (Bias-Feld), wobei die Bias-Feldstärke größer ist als die Erdmagnetfeldstärke, der justierbar ausgebildet und symmetrisch bezüglich des Magnetfeldsensors in einem Abstand angeordnet ist, wobei der Abstand zwischen Magnetfeldsensor (1) und Permanentmagnet (2) mindestens doppelt so groß ist wie der Durchmesser des Permanentmagneten (2), und
- einem Vorverstärker (3),
und
eine nachgeschaltete Auswerte-/Anzeige-Einheit (III) mindestens aufweisend
- Mittel zur Schwellwerteinstellung,
- Komparator oder quasi-logarithmischen Verstärker,
- Mittel zur optischen und/oder akustischen Anzeige,
- Mittel zur Stromversorgung der Auswerte-/Anzeige-Einheit
und
ein Mittel mit integrierten Leitungen, das Sensorkopf (I) und Auswerte/Anzeige-Einheit (II) elektrisch miteinander verbindet, und Mittel zur Messung des zurückgelegten Weges des Sensorkopfes (12).

2. Vorrichtung nach Anspruch 1,
bei der das Mittel mit integrierten Leitungen, das Sensorkopf (I) und Auswerte-/Anzeige-Einheit (II) elektrisch miteinander verbindet, eine Glasfaser-Ahle (III) ist.

3. Vorrichtung nach Anspruch 2, bei der die Glasfaser-Ahle (III) einen Stecker mit Zug- und Druckentlastung (5) für die Aufnahme des Sensorkopfes (I) aufweist.

4. Vorrichtung nach Anspruch 1,
bei der am Sensorkopf (I) eine Zugöse (11) angeordnet ist.

5. Vorrichtung nach Anspruch 1,
bei der der Sensorkopf (I) wasserdicht ausgebildet ist.

6. Vorrichtung nach Anspruch 1,
bei der der Sensorkopf (I) auswechselbar ausgebildet ist.

7. Verfahren zur Ortung und zur Bestimmung der Ausdehnung von nicht sichtbaren Körpern aus ferromagnetischen Materialien in nichtferromagnetischer Umgebung mit den folgenden Verfahrensschritten:
Erzeugung eines ungestörten Magnetfeldes, dessen Magnetfeldlinien durch einen Magnetfeldsensor gerichtet sind,
Einstellen eines dem Anwendungsfall angepassten Schwellwertes für eine Magnetfeldänderung,
Bestimmung und Anzeige der Differenz zwischen eingestelltem Schwellwert und gemessenem Wert bei einer Störung des Magnetfeldes im Magnetfeldsensor und
gleichzeitige Bestimmung des Ortes des Magnetfeldsensors hierbei.
